# EUROPEAN PATENT SPECIFICATION

(11) **EP 0 985 849 B1**
(45) Date of publication and mention of the grant of the patent: **20.08.2003**
(21) Application number: 98830527.2
(22) Date of filing: 09.09.1998
(51) Int. Cl.: F16H 7/08

(54) **Belt or chain tensioning device with piston having a plurality of reciprocally movable elements**
Triebketten- oder Riemenspanneinrichtung mit einem Kolben mit mehreren relativ zu einander bewegbaren Teilen
Dispositif de tension pour chaîne ou courroie muni d'un piston comportant plusieurs parties mobiles l'une par rapport à l'autre.

(43) Date of publication of application: 15.03.2000
(73) Proprietor: Morse Tec Europe S.r.l., 20133 Milano (IT)
(72) Inventor: Merelli, Roberto, 20052 Monza (MI) (IT)
(74) Representative: Petruzziello, Aldo

(56) References cited:
- FR-A- 2 320 470
- GB-A- 2 093 150
- US-A- 4 826 470
- US-A- 5 700 216
- US-A- 5 720 683

## Description

The invention refers to devices for tensioning power transmission means such as belts or chains.

Reference will be made in particular to timing chain means on vehicles, although it is understood that the tensioning devices that will be described can also be applied to other transmission means such as belts, toothed belts and the like.

A timing system on vehicles, particularly industrial vehicles, generally comprises a chain transmission, in which the chain is wound on two or more sprocket wheels, one of which is a driving wheel.

Since it is often necessary for reasons of adjustment, wear on materials and take-up of play to compensate for a certain slack on the chain, the use of sliding-shoe tensioning devices, in which a sliding shoe is pushed with an adjustable force against a branch of the chain, is known in the field.

Various means are known for pushing a tensioning shoe against a chain. The invention refers in particular to cylinder/piston tensioning devices in which a stationary element of a cylinder/piston assembly (generally the cylinder) is mounted on an engine block and a movable element thereof (generally the piston) is sliding with respect to the stationary element and integral with a shoe, which is placed in contact with the chain to tension it.

United States patent No. 4 826 470 to Breon et al. discloses a cylinder/piston assembly tensioning device, in which the cylinder forms a chamber for pressurized fluid, a static plunger is interposed between the cylinder and the piston, and a spring is interposed between a flange of the static plunger and the piston. The usable stroke of the piston is limited to the extension of the piston skirt, which must never completely leave the cylinder. This patent also describes a solution with a piston formed by two parts that create between them a path for the fluid to exit. The maximum useful stroke of the piston is nevertheless limited by the axial length of the skirt integral with the piston head. The problem of having a greater useful stroke has not even been posed.

United States patent 4 963 121 to Himura et al. also discloses a tensioning device for a belt or chain drive mechanism that comprises a hollow piston element slidable inside a stationary cylinder; a fluid chamber is defined between two reciprocally sliding tubular elements of which one is fixed to the cylinder and the other moves under the action of a fluid and of a spring, integrally with the piston. In this case also, the maximum useful outward stroke of the piston is defined by the length of the skirt integral with the piston head, and the problem of having a longer stroke is not even posed.

GB 2 093 150 discloses a tensioning device for endless chains which acts exclusively on a guide wheel for the chain. It does not provide any elastic or spring means for cooperating in tensioning the chain. A device as said in the said publication is generally applied in fields (cutting machines, conveyor belt) which are very different from and have less accuracy requirements than the timing system mentioned in the present application.

US 5,720,683 discloses a chain tensioner of a merely mechanical type, without any pressurized fluid supply. Furthermore, said publication does not disclose any telescopic arrangement of the pistons and the cylinder and the distal piston element are acted upon by separate spring means.

US 5,700,216 discloses a hydraulic tensioner incorporating two pistons for a dual chain system, that is, each piston acts on a single chain, and both pistons are slidable in a same cylinder. The tensioner is designed to permit each piston to retract or extend with respect to the other to adjust the tensioning force on each chain. Nowhere in the disclosure a telescopic arrangement of the pistons is disclosed, that is an arrangement wherein a piston proximal element and a piston distal element are slidable with respect to each other and to the cylinder in a way to be able to achieve a greater extension.

FR 2 320 470 discloses a tensioning device for transmission systems, with an elongated flexible element such as a chain or belt, comprising a cylinder/piston assembly that includes a cylinder with an inner chamber and a piston sliding in a inner chamber between a retracted position and a extended position wherein the piston rod extending from the cylinder operates on a movable shoe to tension the chain , further comprising elastic pushing means acting between said cylinder and said piston to tension the chain and supply means for supplying pressurized fluid to said chamber of the cylinder for counteracting spring action of the elastic means to release belt tension. The maximum useful stroke of piston is a function of its inner chamber size.

EP 0 867 637 comprises the features mentioned in the preamble of claim 1.

The invention forming the subject matter of the present application aims to solve the problem of obtaining a longer maximum useful stroke, though having a limited cylinder-piston assembly length in the retracted state.

The invention relates to a tensioning device as stated in claim 1.

Further new and useful characteristics are stated in the dependent claims.

Facing walls of the skirts of the piston elements and the cylinder have reciprocal engaging means to limit the movement of each with respect to the other.

The new tensioning device allows the piston to be extracted from the cylinder for a much longer stroke than previous tensioning devices, the axial measurement of the tensioning device or axial length of the tensioning device at rest being equal.

An exemplary embodiment of the invention will be described below with reference to the attached figures, in which it is illustrated only as an unrestrictive example, and in which:
Figure 1 is an axial sectional view of a cylinder-piston assembly of a tensioning device according to the invention, in a retracted state;
Figure 2 is a sectional view similar to Figure 1 but the tensioning device is illustrated in a partially extended state;
Figure 3 is a sectional view similar to the previous figures, with the tensioning device in the position of maximum extension;
Figures 4 and 5 illustrate a tensioning device positioned on a chain drive of a timing system.

A tensioning device illustrated in the figures is indicated as a whole by reference numeral 10.

The tensioning device 10 comprises a body or cylinder 20 and a piston or plunger 30 having a plurality of elements. In the particular case the piston comprises two elements 31 and 32, respectively. The body or cylinder 20 has fixing tabs 21 and forms an internal cylindrical chamber 22. The chamber 22 communicates with a supply of pressurized fluid, generally oil, through an opening 23, and a check valve 24, in a per se known manner which is therefore not described.

The piston 30 comprises a first element or distal element 31 and a second element or proximal element 32. The first element comprises a crown or piston head, 310, and a cylindrical skirt 311. The second, proximal element 32 comprises a cylindrical skirt 321. Between the bottom of the cylindrical chamber 22 of the cylinder and the head 310 of the distal element a pressure spring 40 is interposed. The outer wall of the skirt 311 of the distal element of the piston has a seat 312 for a piston ring 313, in a more or less intermediate position along the length of the skirt 311. The inner surface of the piston element 32 has a groove 322 in the proximity of the distal end thereof, such as to allow widening of the piston ring 313. Engagement of the piston ring 313 in the groove 322 prevents extraction of the distal element 31 of the piston with respect to the proximal element 32 of the piston.

The outer wall of the proximal element 32 of the piston has a seat 323 for a piston ring 324 and correspondingly in the proximity of the end the inner face of the cylinder 20 has a groove 202 able to receive the elastic ring 324 to stop extraction of the element 32 of the piston from the cylinder.

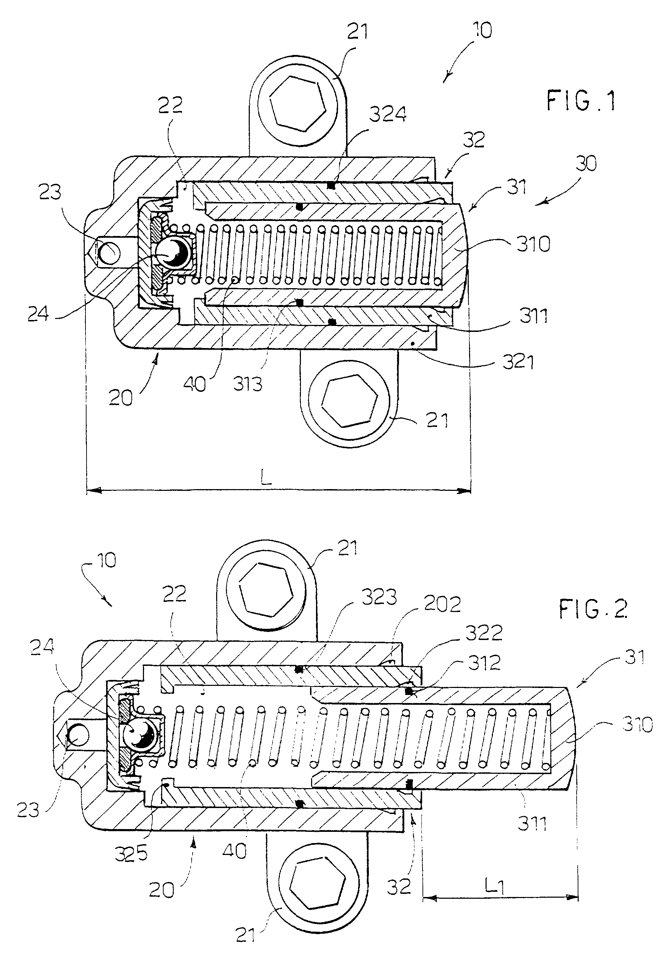

The annular grooves or housings 322, 202 preferably have the respective distal wall forming a steep step outwards (that is, toward the right in Fig. 1) and the proximal wall gently sloping inward, that is, toward the left in Fig. 1. The proximal element 32 of the piston 30 has a step 325 in its proximal part facing toward the axis to form an abutment for distal element 31 in a the retracted position.

Operation of the tensioning device will be described below.

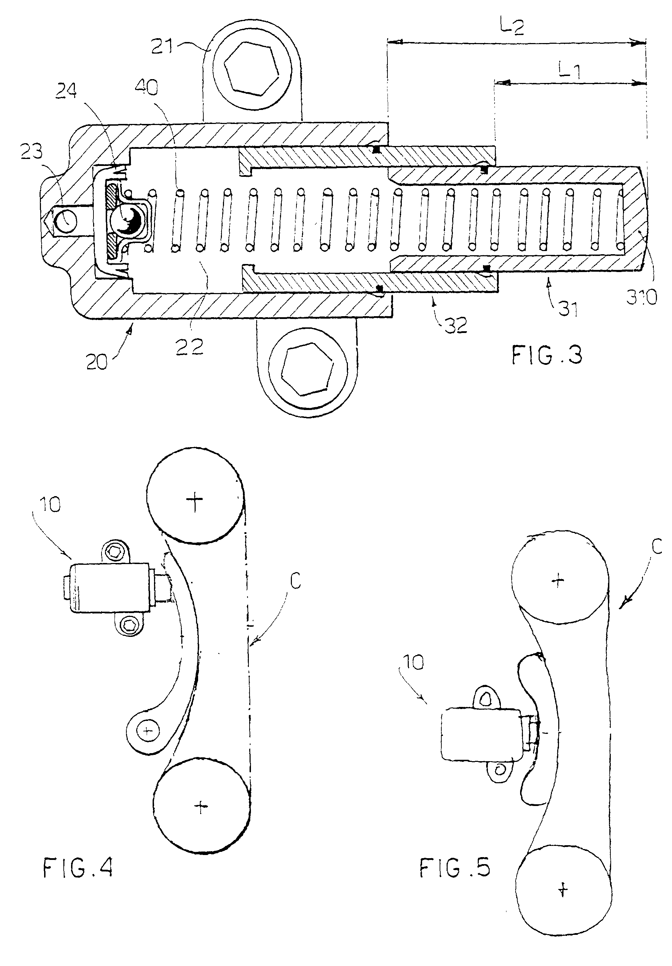

In the retracted or resting position illustrated in Figure 1, the two elements 31 and 32 of the piston 30 are in the retracted state, that is to say the element 31 is completely or almost completely received inside the cylinder 20. This position can coincide with the initially set position of the tensioning device. The head 310 of the device is suitable to be brought into contact with a shoe, generally an oscillating shoe (Fig. 4) or a translating shoe (Fig. 5) which can be pushed against chain C or the like to tension it. When fluid is introduced through the opening 23 and the check valve 24 into the chamber 22, through the action of the fluid and the spring 40 the bottom of the chamber 22 of the cylinder and the head 310 of the distal element 31 of the piston are drawn apart. This causes the element 31 to be extracted (towards the right in Fig. 1) with respect to the second element 32, and the element 32 to be extracted with respect to the cylinder 20. The position of the elements 31 and 32 with respect to each other and with respect to the cylinder 20 is determined by the balance of forces due to the pressure of the fluid and to the spring, on one hand, and to the reaction of the chain on the other: And, in any case it is limited by engagement of the piston ring 312 in the groove 322, and by engagement of the piston ring 323 in the groove 202. The maximum extension position is illustrated in Figure 3. As can be seen from the figures, for tensioning devices having a same axial length L, (Fig. 1), in the retracted position, a conventional tensioning device could give a maximum useful stroke L1 as shown in Figure 2, whilst the new tensioning device permits a useful stroke L2, marked in Figure 3, which is considerably greater than L1.

## Claims

1. A tensioning device for a transmission system having an elongated flexible element such as a chain or belt, comprising a cylinder/piston assembly that includes a cylinder (20) having a cylinder chamber (22) and a piston sliding between a retracted position and an extended position, further comprising supply means (23, 24) for supplying pressurized fluid to said cylinder chamber and spring means (40) acting between said cylinder and said piston, said fluid and spring means causing extension of the piston with respect to the cylinder, wherein said piston (30) comprises at least a proximal and a distal piston element (31, 32), which are reciprocally telescopingly sliding and sliding with respect to the cylinder, and wherein said distal piston element (31) always protrudes with respect to said proximal piston element (32),
**characterized in that**
said spring means (40) act between said cylinder and said distal piston element (31).

2. A device according to claim 1, **characterized in that** distal piston element (31) is provided with a piston head (310) and said proximal piston element (32) has a passageway therethrough permitting the reversible flow of fluid through said proximal piston element to act on said piston head of said distal piston element.

3. A device according to claim 1, **characterized in that** said piston elements are cylindrical in shape and comprise limiting means (313, 324, 322, 202) for limiting the stroke of one element with respect to the other element and for limiting the stroke of at least one of the piston elements with respect to the cylinder.

4. A device according to claim 3, **characterized in that** said limiting means comprise an elastic ring (313, 324) on an outer surface of a respective skirt part of a piston element and grooves (322, 202) on the facing inner surfaces of the other piston element and of the cylinder, respectively.

5. A device according to claim 4, **characterized in that** each said groove has a steep distal circumferential wall and a gently sloping proximal circumferential wall.

## Patentansprüche

1. Eine Spannvorrichtung für ein Getriebesystem mit einem länglichen, flexiblen Element wie eine Kette oder ein Riemen, die eine Zylinder-/Kolben-Baugruppe umfasst, welche einen Zylinder (20) einschließt, der eine Zylinderkammer (22) und einen Kolben aufweist, welcher zwischen einer eingefahrenen und einer ausgefahrenen Stellung hin- und hergleitet, sowie desweiteren Zuführelemente (23, 24) für die Zufuhr einer unter Druck stehenden Flüssigkeit zu der genannten Zylinderkammer und Federelemente (40) umfasst, die zwischen dem genannten Zylinder und dem genannten Kolben funktionieren, wobei die genannte Flüssigkeit und die Federelemente die Ausdehnung des Kolbens im Verhältnis zum Zylinder verursachen, wobei der genannte Kolben (30) mindestens ein proximales und ein distales Kolbenelement (31, 32) umfasst, die jeweils wechselseitig teleskopisch gleiten und im Verhältnis zum Zylinder gleiten, und wobei das genannte distale Kolbenelement (31) immer im Verhältnis zu dem genannten proximalen Kolbenelement (32) hervortritt, **dadurch gekennzeichnet, dass** die genannten Federelemente (40) zwischen dem genannten Zylinder und dem genannten distalen Kolbenelement (31) einwirken.

2. Eine Vorrichtung gemäß Anspruch 1, **dadurch gekennzeichnet, dass** das distale Element (31) mit einem Kolbenkopf (310) ausgerüstet ist und das genannte proximale Kolbenelement (32) einen Durchgang dadurch aufweist, der den umkehrbaren Durchfluss der Flüssigkeit durch das genannte proximale Kolbenelement gestattet, um auf den genannten Kolbenkopf des genannten distalen Kolbenelements einzuwirken.

3. Eine Vorrichtung gemäß Anspruch 1, **dadurch gekennzeichnet, dass** die genannten Kolbenelemente zylinderförmig sind und Begrenzungselemente (313, 324, 322, 202) zur Begrenzung des Hubs von jeweils einem Element im Verhältnis zum anderen Element aufweisen, und zur Begrenzung des Hubs von mindestens einem der Kolbenelemente im Verhältnis zum Zylinder.

4. Eine Vorrichtung gemäß Anspruch 3, **dadurch gekennzeichnet, dass** die genannten Begrenzungselemente einen elastischen Ring (313, 324) ari einer äußeren Oberfläche eines entsprechenden Randbereichs eines Kolbenelements sowie Rillen (322, 202) jeweils an der gegenüberliegenden inneren Oberfläche des anderen Kolbenelements und des Zylinders umfassen.

5. Eine Vorrichtung gemäß Anspruch 4, **dadurch gekennzeichnet, dass** jede der genannten Rillen eine steile distale, peripherische Wand und eine proximale peripherische Wand mit sanfter Schräge aufweist.

## Revendications

1. Dispositif de mise en tension d'un système de transmission ayant un élément flexible allongé tel qu'une chaîne ou une courroie, comprenant un cylindre/piston qui renferme un cylindre (20) ayant une chambre de cylindre (22) et un piston coulissant entre une position de retrait et une position d'extension, comprenant également des dispositifs d'alimentation (23, 24) pour approvisionner en fluide sous pression ladite chambre de cylindre et des dispositifs de ressort (40) opérant entre ledit cylindre et ledit piston, ledit fluide et lesdits dispositifs de ressort provoquant une extension du piston par rapport au cylindre, où ledit piston (30) comprend au moins un élément de piston de distance et un élément de piston de proximité (31, 32) qui coulissent réciproquement de façon télescopique et qui coulissent par rapport au cylindre et où ledit élément de piston de distance (31) dépasse toujours par rapport audit élément de piston de proximité (32), **caractérisé en ce que** lesdits dispositifs de ressort (40) opèrent entre ledit cylindre et ledit élément de piston de distance (31).

2. Dispositif selon la revendication 1, **caractérisé en ce que** ledit élément de piston de distance (31) possède une tête de piston (310) et ledit élément de piston de proximité (32) possède un passage permettant au flux réversible de fluide d'agir à travers ledit élément de piston de proximité sur ladite tête de piston dudit élément de piston de distance.

3. Dispositif selon la revendication 1, **caractérisé en ce que** lesdits éléments de piston ont une forme cylindrique et qu'ils comprennent des dispositifs de limitation (313, 324, 322, 202) pour limiter la course d'un élément par rapport à l'autre élément et limiter la course d'au moins un des éléments de piston par rapport au cylindre.

4. Dispositif selon la revendication 3, **caractérisé en ce que** lesdits dispositifs de limitation comprennent un anneau ressort (313, 324) sur une surface extérieure d'une partie de jupe respective d'un élément de piston et des cannelures (322, 202) sur les surfaces intérieures frontales respectivement de l'autre élément de piston et du cylindre.

5. Dispositif selon la revendication 4, **caractérisé en ce que** chacune desdites cannelures possède une paroi de circonférence de distance ayant une pente raide et une paroi de circonférence de proximité ayant une pente légère.
